# EUROPEAN PATENT APPLICATION

(11) **EP 4 310 126 A1**
(43) Date of publication of application: **24.01.2024**
(21) Application number: 22186016.6
(22) Date of filing: 20.07.2022
(51) Int. Cl.: C08G 59/50, C08G 59/68

(54) **CHEMICAL ANCHOR SYSTEM**

(71) Applicant: Hilti Aktiengesellschaft, 9494 Schaan (LI)
(72) Inventor: Martin-Lasanta, Ana-Maria, 35398 Gießen (DE)
(74) Representative: Hilti Aktiengesellschaft Corporate Intellectual Property

(57) **Abstract**

Subject of the invention is a chemical anchor system which comprises a component (A) comprising an epoxide bearing two or more epoxy groups and having an epoxy equivalent, and a component (B) comprising ≥ 5 wt.% of a tertiary amine, based on the total weight of component (B), and having an amino hydrogen equivalent, wherein a ratio of components (A) and (B), based on the epoxy equivalent and the amino hydrogen equivalent, is non-stoichiometric.

## Description

### Field of the invention

The invention relates to a chemical anchor system, to corresponding chemical anchors and processes for their preparation, and to corresponding cured systems and uses.

### State of the art

Chemical anchoring is generally a technique for fastening to concrete or similar substrates. Chemical anchors typically provide more flexibility than mechanical anchors. However, during the service life of a chemical anchor, especially under sustained loads also called quasi permanent loads, adhesive bonded anchors on concrete are prone to creep. This may considerably affect their long-term performance as for example described in Nilforoush, R.; Nilsson, M.; Soderlind, G.; Elfgren, L.; "Long-Term Performance of Adhesive Bonded Anchors", Structural Journal, 2016, 113 (2), 251-261. Creep is the tendency of a solid material to move slowly or deform permanently under the influence of persistent mechanical stresses like for example sustained loads. Creep can occur as a result of long-term exposure to high levels of stress. Moreover, creep is more severe at higher temperatures, meaning that the material suffers larger deformations under same load if it is heated for a certain period of time. The creep characterization of the adhesive bonded anchor therefore plays an important role in the reliability and durability (namely the design) of the anchoring point in civil engineering.

Additionally, it is known that temperature affects the performance of chemical anchors, as for example described in Cook, R. A., Konz, R. C., "Factors Influencing Bond Strength of Adhesive Anchors", ACI Structural Journal, 2001, 98, 76- 86 and in Lahouar, M., Caron, J.-F., Pinoteau, N., Forêt, G., Benzarti, K., "Mechanical behavior of adhesive anchors under high temperature exposure: experimental investigation", International Journal of Adhesion and Adhesives, 2017, 78, 200 - 211. It is known that an increase of the in-service-temperature (IST) has the effect of weakening the bond, that is weaking the binder system, and leads to a significant decay in the bearing capacity of the chemical anchors.

In view of these challenges, chemical anchors that show a better creep performance, in particular better performance dimensions creep, are desired. At the same time, chemical anchors with a lower sensitivity to temperature, are desired. Accordingly, chemical anchor systems which give chemical anchors having both, improved creep performance and lower sensitivity to temperature, are particularly desired.

Several modifications of known chemical anchor systems for improving the characteristics of the resulting chemical anchors have been considered. For example, the use of tertiary amines in chemical anchor systems is contemplated in EP 1 716 195 B1. However, no relationship between tertiary amines and the creep performance of chemical anchors is described therein.

Overall, there remains a general desire for improvement of chemical anchor systems known in the art.

### Problem underlying the invention

It is an object of the present invention to provide a chemical anchor system which at least partially overcomes the drawbacks encountered in the art.

It is in particular an object of the present invention to provide a chemical anchor system which leads to an improved creep performance of a chemical anchor.

It is also an object of the present invention to provide a chemical anchor system which leads to lower sensitivity of a chemical anchor to temperature.

It is further an object of the present invention to provide a chemical anchor system which leads to an improved balance between creep performance and temperature sensitivity.

It is furthermore an object of the present invention to provide a chemical anchor system which leads to an improved bond strength of a chemical anchor, in particular an improved bond strength of a chemical anchor in concrete.

It is another object of the present invention to provide a chemical anchor which at least partially overcomes the drawbacks encountered in the art.

It is another object of the present invention to provide a cured system which at least partially overcomes the drawbacks encountered in the art.

It is another object of the present invention to provide a process for preparing a chemical anchor which at least partially overcomes the drawbacks encountered in the art.

It is another object of the present invention to provide a use of a chemical anchor system which at least partially overcomes the drawbacks encountered in the art.

### Disclosure of the invention

Surprisingly, it was found that the problem underlying the invention is solved by a chemical anchor system according to the claims. Further embodiments of the invention are outlined throughout the description.

Subject of the invention is a chemical anchor system, comprising:
a component (A) comprising an epoxide bearing two or more epoxy groups and having an epoxy equivalent, and
a component (B) comprising ≥ 5 wt.% of a tertiary amine, based on the total weight of component (B), and having an amino hydrogen equivalent,
wherein a ratio of components (A) and (B), based on the epoxy equivalent and the amino hydrogen equivalent, is non-stoichiometric.

Such a chemical anchor system according to the present invention can result in an improved creep performance of a chemical anchor made from the system. Additionally, a chemical anchor made from the chemical anchor system can have a lower sensitivity to temperature. In particular, such a chemical anchor can balance out creep performance and temperature sensitivity. More specifically, it has been found that a content of ≥ 5 wt.% of a tertiary amine in component (B) can lead to improved creep performance in actual anchoring applications. However, it has also been found that respectively increased contents of tertiary amine may lead to a reduced pull out performance at higher temperatures, as for example shown by the experimental pull out parameters R1 and B3 (80°C). Surprisingly, such pull out parameters can be improved again when components (A) and (B) are used in non-stoichiometric amounts, i.e., when the ratio of components (A) and (B), based on the epoxy equivalent and the amino hydrogen equivalent, is non-stoichiometric. In this way, a chemical anchor made from the chemical anchor system according to the invention can show an improved balance between creep performance and pull out performance. At the same time, a chemical anchor made from the chemical anchor system according to the invention can show an improved bond strength, especially when used for anchoring in concrete.

Component (A) is the resin component of the chemical anchor system and is thus herein sometimes referred to as "resin". Component (B) is the hardener component of the chemical anchor system and is thus herein sometimes referred to as "hardener". Without wishing to be bound by theory, it is assumed that the tertiary amine comprised by component (B) promotes a reaction between components (A) and (B), i.e., lowers the activation energy of a reaction between components (A) and (B). In other words, the tertiary amine functions as a catalyst or accelerator, respectively. The tertiary amine is herein thus sometimes referred to as a "catalyst" or an "accelerator".

The epoxy equivalent of component (A) is herein also referred to as EEQ and is naturally greater than zero (>0 g/eq). Actual EEQs are given in g/eq, i.e., in grams of component (A) per 1 mol of epoxy groups. The epoxy groups may solely stem from the epoxide bearing two or more epoxy groups comprised by component (A). It is also possible that component (A) comprises one or more further epoxide(s). The epoxy groups of such optional one or more further epoxide(s) then add to the epoxy equivalent of component (A).

The amino hydrogen equivalent of component (B) is herein also referred to as AHEQ and is naturally greater than zero (>0 g/eq). Actual AHEQs are given in g/eq, i.e., in grams of component (B) per 1 mol of amine hydrogens (corresponding to 1 mol of N-bonded protons). The tertiary amine comprised by component (B) does not bear an amine hydrogen. Component (B) therefore regularly comprises at least one compound bearing at least one primary amine group (-NH₂, corresponding to two amine hydrogens) or at least one secondary amine group (-NR¹H, corresponding to one amine hydrogen). It is preferred that in a chemical anchor system according to the present invention, component (B) comprises at least one compound bearing at least one primary amine group, more preferably bearing at least two primary amine groups, still more preferably bearing exactly two primary amine groups. Such a compound in component (B) can lead to an improved reaction with the epoxide comprised by component (A), especially to a particular fast and complete reaction.

Suitable compounds bearing at least on primary amine group (primary amines) or at least one secondary amine group (secondar amines), without limiting the scope of the invention, include: 1,2-diaminoethane(ethylenediamine), 1,2-propanediamine, 1,3-propanediamine, 1,4-diaminobutane, 2,2-dimethyl-1, 3-propanediamine(neopentanediamine), diethylaminopropylamine (DEAPA), 2-methyl-1, 5-diaminopentane, 1,3-diaminopentane, 2,2,4- or 2,4,4-trimethyl-1, 6-diaminohexane and mixtures thereof (TMD), 1-Amino-3-aminomethyl-3, 5,5-trimethylcyclohexane, 1,3-bis(aminomethyl)cyclohexane, 1,2-bis(aminomethyl)cyclohexane, hexamethylenediamine (HMD), 1, 2- and 1,4-diaminocyclohexane (1,2-DACH and 1,4-DACH), bis(4-aminocyclohexyl)methane, bis(4-amino-3-methylcyclohexyl)methane, diethylenetriamine (DETA), 4-Azaheptane-1, 7-diamine, 1,11-diamino-3, 6,9-trioxundecane, 1,8-diamino-3, 6-dioxaoctane, 1,5-diamino-methyl-3-azapentane, 1,10-diamino-4, 7-dioxadecane, bis(3-aminopropyl)amine, 1,13-diamino-4,7, 10-trioxatridecane, 4-aminomethyl-1, 8-diaminooctane, 2-butyl-2-ethyl-1, 5-diaminopentane, N, N-bis-(3-aminopropyl)methylamine, triethylenetetramine (TETA), tetraethylenepentamine (TEPA), pentaethylenehexamine (PEHA), bis(4-amino-3-methylcyclohexyl)methane, 1,3-benzenedimethanamine (m-xylylenediamine, mXDA), 1,4-benzenedimethanamine (p-xylylenediamine, pXDA), 5-(aminomethyl)bicyclo[[2.2.1]hept-2-yl]methylamine (NBDA, norbornandiamine), dimethyldipropylenetriamine, dimethylaminopropyl-aminopropylamine (DMAPAPA), 3-aminomethyl-3, 5,5-trimethylcyclohexylamine (isophoronediamine (IPD)), diaminodicyclohexylmethane (PACM), mixed polycyclic amines (MPCA) (e.g. E.g., Ancamine 2168), dimethyldiaminodicyclohexylmethane (Laromin^{®} C260), 2,2-bis(4-aminocyclohexyl)propane, Diethylmethylbenzoldiamine (DETDA), 4,4'-Diaminodiphenylsulfon (Dapson), mixed polycyclic amines (MPCA) (e.g. Ancamine^{®} 2168), Dimethyldiaminodicyclohexylmethane (Laromin^{®} C260), 2,2-bis(4-aminocyclohexyl)propane, (3(4),8(9)bis(aminomethyldicyclo[5.2.1.0^{2,6}]decane (mixture of isomers of tricyclic primary amines; TCD-Diamine), methylcyclohexyl-diamin (MCDA), N,N'-diaminopropyl-2-methyl-cyclohexane-1,3-diamine, N,N'-diaminopropyl-4-methyl-cyclohexane-1,3-diamine, N-(3-aminopropyl)cyclohexylamine, and 2-(2,2,6,6-tetramethylpiperidin-4-yl)propane-1,3-diamine.

Polyamines preferred according to the invention are 2-methylpentanediamine (DYTEK^{®} A), 1-amino-3-aminomethyl-3, 5,5-trimethylcyclohexane (IPD), 1,3-benzenedimethanamine (m-xylylenediamine, mXDA), 1,4-benzenedimethanamine (p-xylylenediamine, PXDA), 1,6-diamino-2, 2,4-trimethylhexane (TMD), diethylenetriamine (DETA), triethylenetetramine (TETA), tetraethylenepentamine (TEPA), pentaethylenehexamine (PEHA), N-ethylaminopiperazine (N-EAP), 1,3-bisaminomethylcyclohexane (1,3-BAC), (3(4),8(9)bis(aminomethyl)dicyclo[5. 2.1. 02,6]decane (mixture of isomers, tricyclic primary amines; TCD diamine), 1,14-diamino-4, 11-dioxatetradecane, dipropylenetriamine, 2-methyl-1, 5-pentanediamine, N, N'-dicyclohexyl-1, 6-hexanediamine, N, N'-dimethyl-1, 3-diaminopropane, N, N'-diethyl-1, 3-diaminopropane, N, N-dimethyl-1, 3-diaminopropane, secondary polyoxypropylenediamines and triamines, 2,5-diamino-2, 5-dimethylhexane, bis(aminomethyl)tricyclopentadiene, 1,8-diamino-p-menthane, bis-(4-amino-3,5-dimethylcyclohexyl)methane, 1,3-bis(aminomethyl)cyclohexane (1,3-BAC), dipentylamine, N-2-(aminoethyl)piperazine (N-AEP), N-3-(aminopropyl)piperazine, or piperazine and methylcyclohexyl-diamine (MCDA).

It is even more preferred that in a chemical anchor system according to the present invention, component (B) comprises at least one compound selected from m-xylylenediamine, 2-methylpentane-1,5-diamine and 1,3-bis(aminomethyl)-cyclohexan, especially m-xylylenediamine. These compounds can improve the bond strength, in particular the bond strength in concrete, of a chemical anchor made from the chemical anchor system. It is also preferred that in a chemical anchor system according to the present invention, component (B) comprises a combination of at least two compounds selected from m-xylylenediamine, 2-methylpentane-1,5-diamine and 1,3-bis(aminomethyl)cyclohexan, especially a combination of m-xylylenediamine and 2-methylpentane-1,5-diamine. Such a combination can improve the creep performance of a chemical anchor made from the chemical anchor system.

As used herein, the stoichiometry of components (A) and (B) refers to the ratio of epoxy groups to amino hydrogens. In principle, one epoxy group can react with one amino hydrogen, for example according to the following reaction:

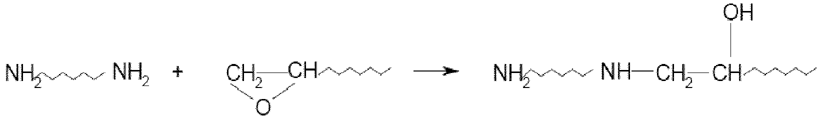

In order to achieve a complete reaction between the epoxy groups and the amino hydrogens, the stoichiometry of components (A) and (B), based on the epoxy equivalent and the amino hydrogen equivalent, needs to be 1:1, i.e., components (A) and (B) are used in stochiometric amounts. In case that either epoxy groups in component (A) or amino hydrogens in component (B) are present in excess, the ratio of components (A) and (B), based on the epoxy equivalent and the amino hydrogen equivalent, is non-stochiometric. In other words, the ratio based on the epoxy equivalent and the amino hydrogen equivalent is different from 1:1. The ratio is thus either <1:1 or >1:1, and is preferably >1:1.

In a chemical anchor system according to the present invention, components (A) and (B) are co-present, or form a kit. Components (A) and (B) do not need to be physically mixed. A physical mixture of components (A) and (B) is regularly referred to herein as a chemical anchor. Such a chemical anchor may also be termed a mortar. In a chemical anchor system and a chemical anchor according to the present invention, respectively, components (A) and (B) are typically present in a liquid state or in a viscous state. A hardened chemical anchor system or a hardened chemical anchor according to the present invention is regularly referred to herein as a cured system.

It is preferred that in a chemical anchor system according to the present invention, the stoichiometry of components (A) and (B) is >1:1, more preferably ≥1.1:1 to 2:1, still more preferably ≥1.1:1 to 1.5:1, and most preferably ≥1.1:1 to 1.3:1. It has been found that with such a stoichiometry of components (A) and (B), a particularly improved balance between creep performance and pull out performance, or balance between creep performance and temperature sensitivity, of the chemical anchor system can be achieved.

It is preferred that in a chemical anchor system according to the present invention, the epoxy equivalent is ≥ 200 g/eq, more preferably ≥ 210 g/eq, still more preferably ≥ 220 g/eq and most preferably ≥ 230 g/eq. With such epoxy equivalents, the crosslinking between components (A) and (B) can be improved, which can further enhance the bond strength of a chemical anchor, in particular an improved bond strength of a chemical anchor in concrete, made from the chemical anchor system according to the present invention.

It is preferred that in a chemical anchor system according to the present invention, the amino hydrogen equivalent is ≥ 50 g/eq, more preferably ≥ 60 g/eq, still more preferably ≥ 70 g/eq and most preferably ≥ 80 g/eq. With such amino hydrogen equivalents, the crosslinking between components (A) and (B) can be improved, which can further enhance the bond strength of a chemical anchor, in particular an improved bond strength of a chemical anchor in concrete, made from the chemical anchor system according to the present invention.

It is preferred that in a chemical anchor system according to the present invention, the epoxy equivalent is ≥ 200 g/eq, and that simultaneously the amino hydrogen equivalent is ≥ 50 g/eq. With such simultaneous epoxy equivalents and amino hydrogen equivalents, the effect of the non-stoichiometric composition of components (A) and (B) may be further increased, i.e., the balance between creep performance and pull out performance may be further improved.

It is preferred that in a chemical anchor system according to the present invention, the tertiary amine bears at least three (3) tertiary amine groups. With such a high number of tertiary amine groups of at least three, the creep performance may be further improved.

It is preferred that in a chemical anchor system according to the present invention, the tertiary amine comprises a 6-membered ring of carbon atoms (C-atoms) or of carbon and hetero atoms, e.g. nitrogen atoms (N-atoms). With such a carbon ring formed from six carbon atoms or a 6-membered hetero ring, i.e. a ring having carbon and heteroatoms, such as nitrogen atoms, or being a structural entity of the tertiary amine, the creep performance may be further improved.

It is particularly preferred that in a chemical anchor system according to the present invention, the tertiary amine bears at least three tertiary amine groups and simultaneously comprises a 6-membered ring of carbon atoms or comprises a 6-membered of three carbon atoms and three heteroatoms, preferably nitrogen atoms. In this way, the creep performance may be particularly improved further.

It is preferred that in a chemical anchor system according to the present invention, the tertiary amine is selected from 2,4,6-tris-(dimethylaminomethyl)phenol (commercially available under the trade name Ancamine^{®} K54) and 1,3,5-tris[3-(dimethylamino)propyl]hexahydro-1,3,5-triazine (commercially available under the trade name Lupragen^{®} N600). The chemical structures of these two tertiary amines are as follows:

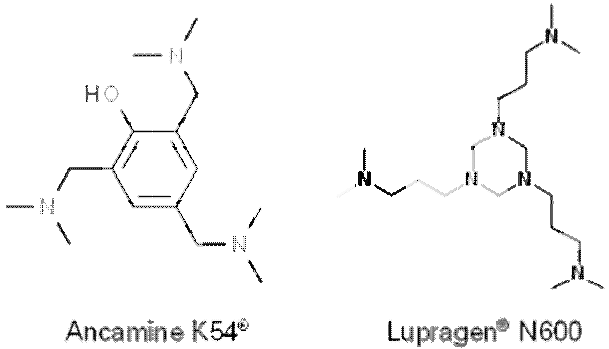

These two specific tertiary amines can particularly improve the creep resistance of a chemical anchor made from the chemical anchor system according to the present invention. It is particularly preferred that the tertiary amine is 2,4,6-tris-(dimethylaminomethyl)phenol.

It is preferred that in a chemical anchor system according to the present invention, component (B) further comprises at least one of m-xylylenediamine (mXDA), 1,3-bis(aminomethyl)cyclohexane (BAC) and 2-methylpentamethylenediamine (Dytek^{®} A), preferably m-xylylenediamine. With a diamine selected from mXDA, BAC and Dytek^{®} A being present in component (B) an improved crosslinking with component (A) may be achieved so that the bond strength of a chemical anchor made from the chemical anchor system can be improved, in particular when the chemical anchor is used for anchoring an element in concrete.

It is preferred that in a chemical anchor system according to the present invention, component (B) comprises, in addition to the tertiary amine, an accelerator for the reaction of the epoxide with the primary or secondary amine.

In one embodiment, the accelerator can be a salt (S). The salt (S) is at least one salt selected from the group consisting of salts of nitric acid, salts of nitrous acid, salts of halogens, salts of trifluoromethanesulfonic acid, and combinations thereof. Preferably, the salt (S) is at least one salt selected from the group consisting of salts of nitric acid, salts of halogens, salts of trifluoromethanesulfonic acid, as well as combinations thereof. It has been found to be particularly preferred that the salt (S) is selected from the group consisting of nitrates (NO₃⁻), iodides (I⁻), triflates (CF₃SO₃⁻), as well as combinations thereof.

Suitable salts of nitric acid are in particular alkali metal nitrates, alkaline earth metal nitrates, lanthanoid nitrates, aluminum nitrate, ammonium nitrate as well as mixtures thereof. Corresponding salts of nitric acid are commercially available. Preferably, alkali metal nitrates and/or alkaline earth metal nitrates are used as salts of nitric acid, such as Ca(NO₃)₂ or NaNO₃. It is also possible to use as salt (S) a solution of a salt in nitric acid such as a solution containing Ca(NO₃)₂/HNO₃. To prepare this solution, CaCO₃ is dissolved in HNO₃.

Suitable salts of nitrous acid are in particular alkali metal nitrites, alkaline earth metal nitrites, lanthanoid nitrites, aluminum nitrite, ammonium nitrite and mixtures thereof. Corresponding salts of nitrous acid are commercially available. Preferably, alkali metal nitrites and/or alkaline earth metal nitrites are used as salts of nitrous acid, such as Ca(NO₂)₂.

Suitable salts of the halogens are in particular alkali metal halides, alkaline earth metal halides, lanthanide halides, aluminum halides, ammonium halides and mixtures thereof. Corresponding salts of the halogens are commercially available. Preferably, the halogens are selected from the group consisting of chloride, bromide, iodide as well as mixtures thereof, whereby iodides in particular are preferably used.

Suitable salts of trifluoromethanesulfonic acid are in particular alkali metal triflates, alkaline earth metal triflates, lanthanide triflates, aluminum triflate, ammonium triflate as well as mixtures thereof. Corresponding salts of trifluoromethanesulfonic acid are commercially available. Preferably, alkali metal nitrates and/or alkaline earth metal nitrates are used as salts of the trifluoromethanesulfonic acid, such as Ca(CF₃SO₃)₂.

In principle, the cations of the salt (S) can be organic, inorganic or a mixture thereof. Preferably, the cation of the salt (S) is an inorganic cation.

As organic cations, for example, ammonium cations substituted with organic radicals, such as tetraethylammonium cations substituted with C₁-C₆ alkyl radicals, can be considered.

Preferably, cations selected from the group consisting of alkali metals, alkaline earth metals, lanthanides, aluminum, ammonium (NH₄⁺) as well as mixtures thereof, more preferably from the group consisting of alkali metals, alkaline earth metals, aluminum, ammonium as well as mixtures thereof and even more preferably from the group consisting of alkali metals, alkaline earth metals, aluminum as well as mixtures thereof are considered as inorganic cations of the salt (S). It is particularly preferred that the cation of salt (S) is selected from the group consisting of sodium, calcium, aluminum, ammonium and mixtures thereof.

The salt (S) may be included in component (B) in an amount of e.g. up to 12 wt.-%, such as up to 10 wt.-, preferably up to 8 wt.-%, based on the total weight of component (B).

Thus, the following compounds or components are particularly suitable as salt (S): Ca(NO₃)₂ (calcium nitrate, usually used as Ca(NO₃)₂ tetrahydrate), a mixture of Ca(NO₃)₂/HNO₃, KNO₃ (potassium nitrate), NaNO₃ (sodium nitrate), Mg(NO₃)₂ (magnesium nitrate, usually used as Mg(NO₃)₂ hexahydrate), Al(NO₃)₃ (aluminum nitrate, usually used as Al(NO₃)₃ nonahydrate), NH₄NO₃ (ammonium nitrate), Ca(NO₂)₂ (calcium nitrite), NaCl (sodium chloride), NaBr (sodium bromide), Nal (sodium iodide), Ca(CF₃SO₃)₂ (calcium triflate), Mg(CF₃SO₃)₂ (magnesium triflate), Li(CF₃SO₃)₂ (lithium triflate).

Component (B) of the invention may comprise one or more salts (S). The salts may be used singly or in a mixture of two or more of the said salts.

In another embodiment, component (B) may include a phenol derivative as accelerator either alone or in combination with the above salt (S). The phenol derivative is preferably selected from the group consisting of polyphenols from the group of novolac resins, styrenated phenols, phenolic lipids and combinations thereof.

Compounds of the following formula (III) are preferably used as polyphenols from the group of novolac resins: 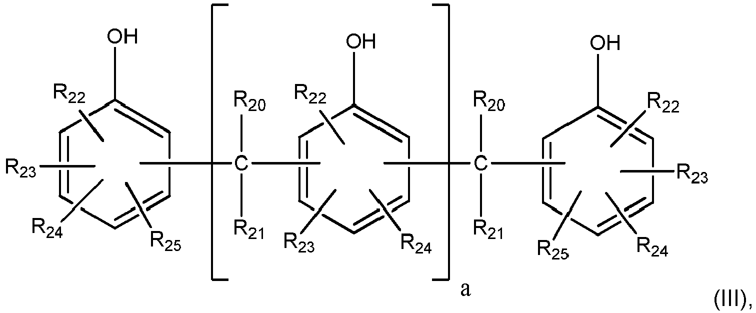 in which
R₂₀ and R₂₁ each denote, independently of one another, H or -CH₃;
R₂₂, R₂₃, R₂₄ and R₂₅ each denote, independently of one another, H, -CH₃ or an aliphatic functional group, preferably a linear, optionally partially unsaturated, unbranched hydrocarbon chain having up to 15 carbon atoms or an alkaryl functional group, preferably -C₈H₉; and where
a is 0 to 20, preferably 0 to 15.

The polyphenol from the group of novolac resins particularly preferably corresponds to the following formula (IV): 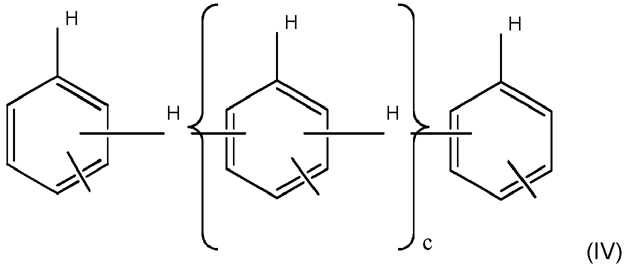 in which
R₂₆ denotes a C1-C15 alkyl group, preferably a methyl group or tert.-butyl group;
b is 0, 1 or 2, and is preferably 1; and
c is 0 to 15, and is preferably 0 to 6.

The novolac resin very particularly preferably corresponds to the above formula (IV), in which R₂₆ denotes CH₃ and b is 1 or 2, or R₂₆ denotes tert.-butyl or a C1-C15 alkyl group and b is 1, and where c is 0 to 15, preferably 1 to 15.

The term styrenated phenols is understood to mean the electrophilic substitution products of phenols such as phenol, pyrocatechol, resorcinol, hydroquinone, hydroxyhydroquinone, phloroglucinol, pyrogallol, o-cresol, m-cresol or p-cresol with styrene or styrene analogs, such as vinyltoluene, vinylpyridine or divinylbenzene, in particular styrene. The styrenated phenol is particularly preferably selected from the reaction products of styrene and phenol which contain mixtures of compounds or individual compounds of the following formulae: 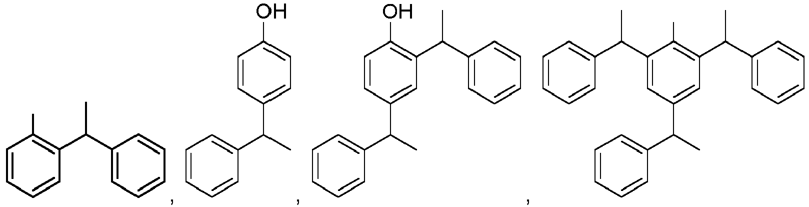 or 2,6-distyrylphenol, such as oligo- and polystyrene compound parts or compounds (products obtained from cationic polymerization of styrenes in phenols, oligomeric or polymeric products).

The term "*phenolic lipids*" is a collective term for a class of natural products that includes long aliphatic chains and phenolic rings. The phenolic lipid is preferably selected from alkyl catechols, alkyl phenols, alkyl resorcinols and anacardic acids. The at least one phenolic lipid is particularly preferably an alkylphenol selected from propylphenol, butylphenol, amylphenol, octylphenol, nonylphenol, dodecylphenol and cardanol-based compounds.

The hardener component (B) according to the invention can comprise one or more phenol derivatives. The phenol derivatives can be used both individually and in a mixture of two or more of the specified phenol derivatives. The hardener component (B) according to the invention preferably contains the phenol derivative in a proportion of from 4 to 25 wt.%, preferably from 10 to 20 wt.%, based on the total weight of the curing agent composition.

In a preferred embodiment, the phenol derivative is at least one polyphenol selected from the group of novolac resins is combined with a salt (S) selected from the group of nitrates. The weight percent ratio of all phenol derivatives, in particular the polyphenols from the group of novolac resins, to all salts (S) in the hardener component (B) according to the invention is preferably 250:1 to 1:4, more preferably 40:1 to 1:2.

It is preferred that in a chemical anchor system according to the present invention, the system has, according to EAD 330499-00-0601 of December 2018, an R1 value of ≥ 20 MPa, more preferably of ≥ 25 MPa, still more preferably of ≥ 30 MPa and most preferably of ≥ 35 MPa. With such an R1 value, the pull out performance of a chemical anchor made from the chemical anchor system may be further improved.

It is preferred that in a chemical anchor system according to the present invention, the system has, according to EAD 330499-00-0601 of December 2018, a B3 (80°C) value of ≥ 5 MPa. With such an B3 value, the pull out performance of a chemical anchor made from the chemical anchor system may be further improved.

It is particularly preferred that in a chemical anchor system according to the present invention, the system has, according to EAD 330499-00-0601 of December 2018, an R1 value of ≥ 20 MPa and simultaneously a B3 (80°C) value of ≥ 5 MPa. In this way, the pull out performance of a chemical anchor made from the chemical anchor system may be particularly improved further.

It is preferred that in a chemical anchor system according to the present invention, the system shows in a creep test, according to EAD 330499-00-0601 of December 2018, conditions M12x72, 27.1 kN and 43°C, a displacement at 200 hours of ≤ 0.5 mm, more preferably of ≤ 0.4 mm, still more preferably of ≤ 0.3 mm and most preferably of ≤ 0.2 mm. With such a displacement at 200 hours, the creep performance of a chemical anchor made from the chemical anchor system may be further improved.

Component (A) according to the present invention typically comprises liquid and solid constituents. As a typically liquid component, at least one epoxy resin-based reactive synthetic resin ("*epoxy resin*") is usually included. According to the invention, "*epoxy resin*" is understood to mean a compound or the combination of two or more compounds containing a reactive epoxy group, also called oxirane group. Such an epoxy group is shown below:

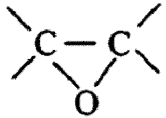

Suitable curable epoxy resins for use in component (A) of the present invention are a large number of commercially available compounds known to those skilled in the art, which contain on average more than one epoxide group, preferably two epoxide groups, per molecule. These epoxy resins can be both saturated and unsaturated and aliphatic, alicyclic, aromatic or heterocyclic and can also contain hydroxyl groups. They may further contain such substituents that do not cause interfering side reactions under the mixing or reaction conditions, for example, alkyl or aryl substituents, ether groups and the like. Within the scope of the invention, trimeric and tetrameric epoxides are also suitable.

Preferably, the epoxy resins are glycidyl ethers derived from polyhydric alcohols, particularly polyhydric phenols such as bisphenols and novolaks, especially those having an average glycidyl group functionality of 1.5 or greater, especially 2 or greater, for example from 2 to 10.

Examples of polyhydric phenols used to prepare epoxy resins include resorcinol, hydroquinone, 2,2-bis(4-hydroxyphenyl)propane (bisphenol A), mixtures of isomers of dihydroxyphenylmethane (bisphenol F), tetrabromo bisphenol A, novolac types, 4,4'-dihydroxyphenylcyclohexane, and 4,4'-dihydroxy-3,3'-dimethyldiphenylpropane. Epoxy-based monomers/resins useful in the present invention include, without limiting the scope of the invention, diglycidyl ethers of bisphenol A and F, and aliphatic and cycloaliphatic epoxides. Other examples include hexanediol diglycidyl ethers, trimethylolpropane triglycidyl ethers, bisphenol A epichlorohydrin resins, and/or bisphenol F epichlorohydrin resins, for example, having an average molecular weight of MW ≤ 2000 g/mol. Liquid diglycidyl ethers based on bisphenol A and/or F with an EEW of 200 to 300 g/EQ are preferred.

It is preferred that in a chemical anchor system according to the present invention, component (A) comprises at least one of a 4,4'-(propane-2,2-diyl)diphenol-based (bisphenol A) epoxy resin and a 4,4'-methylenediphenol-based (bisphenol F) epoxy resin. When component (A) comprises one of these two epoxy resins, an improved crosslinking with component (B) may be achieved so that the bond strength of a chemical anchor made from the chemical anchor system can be improved, especially when the chemical anchor is used for anchoring an element in concrete. These effects may be particularly pronounced when component (A) comprises both, a 4,4'-(propane-2,2-diyl)diphenol-based epoxy resin and a 4,4'-methylenediphenol-based epoxy resin.

According to the invention, reactive diluents, such as glycidyl ethers of aliphatic, alicyclic or aromatic mono- or in particular polyalcohols, which have a lower viscosity than epoxides containing aromatic groups, can be used as a further liquid component. Examples of reactive diluents are monoglycidyl ethers, e.g. o-cresyl glycidyl ethers, and glycidyl ethers with an epoxide functionality of at least 2, such as 1,4-butanediol diglycidyl ether (BDDGE), cyclohexanedimethanol diglycidyl ether and hexanediol diglycidyl ether, as well as tri- or higher glycidyl ethers, such as glycerol triglycidyl ether, pentaerythritol tetraglycidyl ether, trimethylolpropane triglycidyl ether (TMPTGE) or trimethylol ethane triglycidyl ether (TMETGE), with trimethylol ethane triglycidyl ether being preferred. Mixtures of two or more of these reactive diluents can also be used, preferably mixtures containing triglycidyl ether, particularly preferably as a mixture of 1,4-butanediol diglycidyl ether (BDDGE) and trimethylolpropane triglycidyl ether (TMPTGE) or 1,4-butanediol diglycidyl ether (BDDGE) and trimethylolethane triglycidyl ether (TMETGE).

Overall, the reactive diluents are preferably present in an amount of >0 to 60% by weight, in particular of 1 to 20% by weight, based on the total weight of the epoxy resin component (A).

The proportion of epoxy resin component (A) in the total weight of the multicomponent epoxy resin system is preferably from 5 to 90% by weight, in particular from 20 to 80% by weight or from 30 to 70% by weight, such as from 40 to 70% by weight.

Suitable epoxy resins and reactive thinners can also be found in the standard work by Michael Dornbusch, Ulrich Christ and Rob Rasing, "*Epoxy Resins*," Vincentz Network GmbH & Co KG (**2015**), ISBN 13: 9783866308770. These compounds are incorporated herein by reference.

It is preferred that in a chemical anchor system according to the present invention,
the ratio of components (A) and (B) is >≥1.1:1 to 2:1,
the amino hydrogen equivalent is ≥ 50 eq/g,
the tertiary amine is present in component (B) in an amount of ≥ 10 wt.% and is selected from 2,4,6-tris-(dimethylaminomethyl)phenol and 1,3,5-tris[3-(dimethylamino)propyl]hexahydro-1,3,5-triazine,
component (B) further comprises m-xylylenediamine, and
component (A) comprises at least one of 4,4'-(propane-2,2-diyl)diphenol-based epoxy resin and a 4,4'-methylenediphenol-based epoxy resin.

Such a chemical anchor system can result in an improved creep performance of a chemical anchor made from the system, which chemical anchor can additionally have a lower sensitivity to temperature, so as to balance out creep performance and temperature sensitivity. A chemical anchor made from such chemical anchor system can thus show an improved balance between creep performance and pull out performance. Further, a chemical anchor made from the such a chemical anchor system can show an improved bond strength, especially when used for anchoring in concrete.

The chemical anchor system according to the present invention preferably comprises filler in a total amount of 55 wt.-% or less, such as 5 to 55 wt.-%, based on the total weight of the multi-component epoxy resin material. In a preferred embodiment, the total amount of filler in the multi-component epoxy resin material is 20 to 40 wt.-%, more preferably 25 to 35 wt.-%, based on the total weight of the multi-component epoxy resin material.

The filler may be comprised in component (A) and/or component (B), and preferably is comprised in both component (A) and component (B).

The filler is in principle known in the art and may be selected from oxides of silicon and aluminum, or mixed oxides in the presence of further cations. Oxides of silicon or aluminum are primarily silicon dioxide (SiO₂) or aluminum oxide (Al₂O₃). Mixed oxides, if present, are primarily oxides of silicon and aluminum in the additional presence of one or more oxides selected from oxides of the group of metals consisting particularly of calcium, titanium, iron, sodium or the like. In a preferred embodiment, the filler is selected from quartz, silicates, or alumina, in particular α-alumina. Such fillers are commercially available.

Subject of the invention is also a chemical anchor comprising a physical mixture of component (A) and component (B) of a chemical anchor system as described herein. In such a chemical anchor, the mixture of component (A) and component (B) is not completely hardened, i.e., the reaction between component (A) and component (B) is not complete. The preferred embodiments of the chemical anchor system described herein including the claims are likewise preferred for this chemical anchor according to the present invention in an analogous manner.

Subject of the invention is also a cured system comprising a chemical anchor as described herein. In such a cured system, the mixture of component (A) and component (B) is hardened, and the reaction between component (A) and component (B) is preferably complete. The preferred embodiments of the chemical anchor system described herein including the claims are likewise preferred for this cured system according to the present invention in an analogous manner.

Subject of the invention is also a process for preparing a chemical anchor from a chemical anchor system as described herein, comprising the steps:
- separately providing component (A) and component (B), and
- thereafter mixing component (A) and component (B).

The preferred embodiments of the chemical anchor system described herein including the claims are likewise preferred for this process for preparing a chemical anchor according to the present invention in an analogous manner.

Subject of the invention is also a use of a chemical anchor system as described herein for chemically anchoring an element in concrete. The preferred embodiments of the chemical anchor system described herein including the claims are likewise preferred for this use of a chemical anchor system according to the present invention in an analogous manner.

### Brief description of the drawings

Aspects of the invention are shown in the figures. In particular:
Fig. 1 shows the creep performance of Examples 1 and 2 vs. the creep performance of Reference 1.
Fig. 2 shows the creep performance of Examples 9, 7, 10 and 11 in which the stoichiometry of components (A) and (B) was changed.
Fig. 3 shows the creep performance of Examples 12 and 14 vs. the creep performance of Reference 2.

### Materials and methods

In the present invention, in particular the following chemicals have been used:

| **Function** | **Name** | **Supplier** |
|---|---|---|
| Epoxy resin | DGEBA - Araldite^{®} GY 240 | Huntsman Advanced Materials, Germany |
| Epoxy resin | DGEBF - Araldite^{®} GY 282 | Huntsman Advanced Materials, Germany |
| Reactive diluent | BDDGE - Araldite^{®} DY-026 | Huntsman Advanced Materials, Germany |
| Reactive diluent | TMPTGE - Araldite^{®} DY-T-CH | Huntsman Advanced Materials, Germany |
| Filler | Millisil^{®} W12, Quartz flour, average grain size d₅₀ = 16 micrometers | Quarzwerke, Germany |
| Thickener | CabOSil^{®} TS 720 | Cabot corporation, Germany |
| Amine | m-xylylenediamine, mXDA | MGC, Japan |
| Amine | 2-methylpentane-1,5-diamine, Dytek^{®} A | Invista, Netherlands |
| Amine | 1,3-bis(aminomethyl)cyclohexan, BAC | Itochu, Germany |
| Accelerator | Phenolite^{®} TD 2131 | DIC Europe, Germany |
| Accelerator | Ancamine^{®} K54, (tris-2,4,6-dimethylaminomethyl phenol) | Air products, Netherlands |
| Accelerator | Calcium Nitrate Tetrahydrate | Sigma Aldrich, Germany |
| Solvent | 1,2,3-propanetriol, glycerine | Merck, Germany |

### Preparation of Component (A) (Resin)

In a plastic bucket, the liquid epoxy resins were mixed with a wood spatula. Then, the filler and thickener were added and premixed by hand before mixing it further into a dissolver (PC Laborsystem, Volume 1L) during 8.5 minutes under 80 mbar reduced pressure at 3500 rpm.

### Preparation of Component (B) (Hardener)

For the preparation of the (B) component, in a plastic bucket, the specified amount of accelerator or accelerator mixture was added and dissolved in the amine mixture. Then, the filler and thickener were added and premixed by hand before mixing it further into a dissolver (PC Laborsystem, Volume 1L) during 8.5 minutes under 80 mbar reduced pressure at 3500 rpm.

### Mixing and injection in the borehole

The components (A) and (B) were mixed with a stoichiometry one to one based on their EEQ and AHEQ values using a speed-mixer. For the non-stoichiometric examples, the same procedure was followed but using the described stoichiometry.

### Pull Out Test

To determine the bond strength in concrete, pull out experiments under the R1 and B3 (80°C) conditions were made following the description given by the guideline ETAG 001 part 5 (Guideline For European Technical Approval Of Metal Anchors For Use In Concrete), now superseded by EAD 330499-00-0601. In these experiments, threaded rods (size M12) were installed in 14 mm cleaned (2x compressed air 6 bar, 2x brushed and 2x compressed air 6 bar) hammered drilled boreholes made in concrete plates (C20/25) with 60 mm embedment depth. After 24 h curing time at room temperature (RT), the bond strength was determined in R1 pull-out tests. For the B3 (80°C) experiments, after 24 h curing time, the concrete blocks were put in an oven at 80°C for 48 h and the pull-out performed after this time at 80°C.

### Creep Tests

To determine the creep performance, sustained load tests at maximum temperature performance were made following the description given by the guideline ETAG 001 part 5 (Guideline For European Technical Approval Of Metal Anchors For Use In Concrete), now superseded by EAD 330499-00-0601. In these experiments, threaded rods (size M12) were installed in 14 mm cleaned (2x compressed air 6 bar, 2x brushed and 2x compressed air 6 bar) hammered drilled boreholes made in steel-jacketed concrete cylinder (C20/25) with 72 mm embedment depth. After 24 h curing time, the creep tested were started and performed for at least 5 days.

### Examples

In recent experiments, it had been observed that formulations containing more than 5 to 10 wt. % Ancamine^{®} K54 (2,4,6-tris-(dimethylaminomethyl)phenol (also known by the commercial/trade names Ancamine^{®} K54 and DMP-30) in (B) suffer from lower 80°C performance. Surprisingly, a solution for this problem was found by adjusting the stoichiometry between (A) and (B) (i.e., the epoxy and the amine parts) which has led to both: high IST values and better creep performance. A second catalysts, called Lupragen^{®} N600, was also tested to confirm that this creep and IST improvement was also observed for other homopolymerizations catalysts.

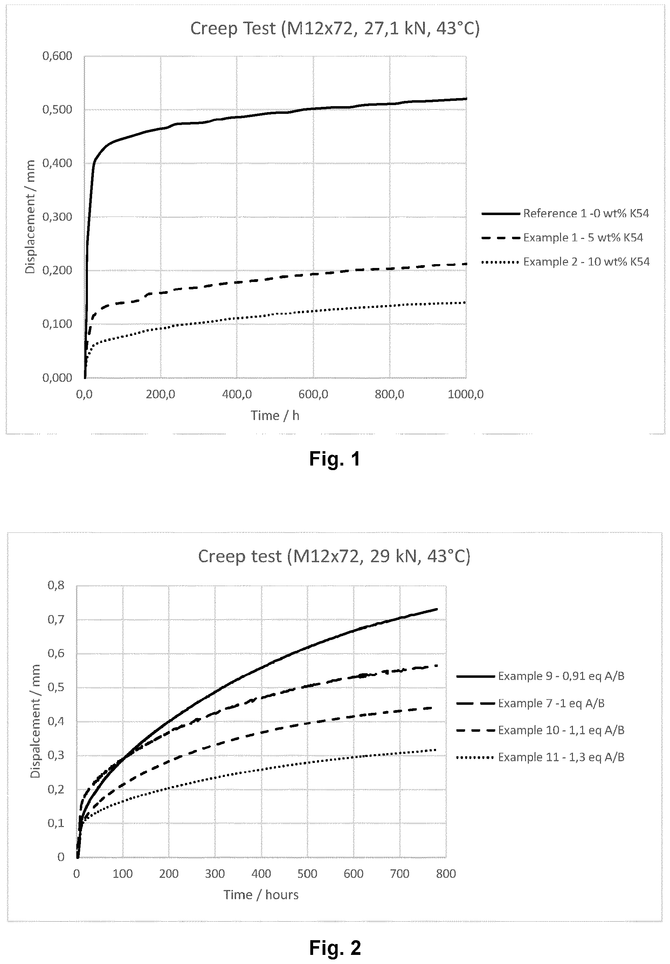

In Table1, Examples 1-2 vs Reference 1 (Ancamine^{®} K54 free), three epoxy-amine anchor systems are described containing all the same components except the Ancamine^{®} K54 and this substance is added in different dosages. In Fig. 1, it can be seen that creep performance improves (showing a reduced initial displacement under sustained load and elevated temperature) for the formulations containing Ancamine^{®} K54. However, formulations containing more than 5 wt. % of Ancamine^{®} K54 in (B) showed at the same time lower B3 (80°C) performance relative to the R1 values (see Table 1), which means a stronger relative decrease of performance at elevated temperatures.

**Table 1. Composition of Examples 1 and 2 vs. Reference 1 and results for R1 and B3 at 80°C.**

| **(A) component / Resin** | **Reference 1** | **Example 1** | **Example 2** |
|---|---|---|---|
| BisA - Araldite^{®} GY 240 | 39 | 34.2 | 30 |
| BisF - Araldite^{®} GY 282 | 21 | 18.4 | 16.1 |
| BDDGE - Araldite^{®} DY-026 | 7.5 | 6.5 | 5.7 |
| TMPTGE - Araldite^{®} DY-T-CH | 7.5 | 6.5 | 5.7 |
| Millisil^{®} W12 | 22.3 | 31.6 | 39.6 |
| Cab-o-Sil^{®} 720 | 2.7 | 2.7 | 2.7 |
| **EEQ / g/eq** | 211 | 240 | 274 |

| **(B) component / Hardener** | | | |
|---|---|---|---|
| mXDA | 8.3 | 7.9 | 7.5 |
| Dytek^{®} A | 33.5 | 31.9 | 30.3 |
| Phenolite^{®} TD 2131 | 10.6 | 10.1 | 9.6 |
| Millisil^{®} W12 | 43.2 | 40.7 | 38.2 |
| Cab-o-Sil^{®} 720 | 4.4 | 4.4 | 4.4 |
| Ancamine^{®} K54 | 0 | 5 | 10 |
| **AHEQ / g/eq** | 71 | 75 | 79 |
| **R1 / Mpa** | 38 | 41 | 42 |
| **SD/Mpa** | 1 | 1 | 1 |
| **B3 (80°C) / Mpa** | 20 | 21 | 20 |
| **SD / Mpa** | 1 | 1 | 1 |

Surprisingly, it was found that the addition of Ancamine^{®} K54 with relatively high dosage (at least 5 wt.%) in the (B)-component of an epoxy amine chemical anchor leads to significant improvements of the creep performance at elevated temperatures.

Additionally, three different amines were compared which were accelerated by the inorganic salt Ca(NO₃)₂ and contained either 5 wt. % or 20 wt.% of Ancamine^{®} K54 in component (B). The results of the comparison are shown in Table 2. These results showed that higher contents of Ancamine K54 undesirably lead to reduced 80°C loads.

**Table 2. Compositions of Examples 3 to 8 and results for R1 and B3 at 80°C.**

| **(A) component / Resin** | **Example 3** | **Example 4** | **Example 5** | **Example 6** | **Example 7** | **Example 8** |
|---|---|---|---|---|---|---|
| BisA - Araldite^{®} GY 240 | 35.0 | 35.0 | 35.0 | 35.0 | 35.0 | 35.0 |
| BisF - Araldite^{®} GY 282 | 18.8 | 18.8 | 18.8 | 18.8 | 18.8 | 18.8 |
| BDDGE - Araldite^{®} DY-026 | 6.7 | 6.7 | 6.7 | 6.7 | 6.7 | 6.7 |
| TMPTGE - Araldite^{®} DY-T-CH | 6.7 | 6.7 | 6.7 | 6.7 | 6.7 | 6.7 |
| Millisil^{®} W12 | 30 | 30 | 30 | 30 | 30 | 30 |
| Cab-o-Sil^{®} 720 | 2.7 | 2.7 | 2.7 | 2.7 | 2.7 | 2.7 |
| **EEQ / g/eq** | 235 | 235 | 235 | 235 | 235 | 235 |

| **(B) component / Hardener** | | | | | | |
|---|---|---|---|---|---|---|
| mXDA | 36.8 | | | 36.8 | | |
| BAC | | 36.8 | | | 36.8 | |
| Dytek A | | | 36.8 | | | 36.8 |
| Ancamine^{®} K54 | 5 | 5 | 5 | 20 | 20 | 20 |
| Millisil^{®} W12 | 52.3 | 52.3 | 52.3 | 37.3 | 37.3 | 37.3 |
| Cab-o-Sil^{®} TS 720 | 4 | 4 | 4 | 4 | 4 | 4 |
| Ca(NO₃)₂ (80% in Glycerin) | 1.9 | 1.9 | 1.9 | 1.9 | 1.9 | 1.9 |
| **AHEQ / g/eq** | 92 | 97 | 79 | 92 | 97 | 79 |
| **R1 / Mpa** | 39 | 41 | 36 | 39 | 36 | 39 |
| **SD / Mpa** | 1 | 1 | 2 | 2 | 1 | 2 |
| **B3 (80°C) / Mpa** | 23 | 24 | 19 | 18 | 19 | 13 |
| **SD / Mpa** | 0 | 1 | 1 | 1 | 1 | 3 |

Without aiming to be bound to the theory, it was considered whether the large amount of the Ancamine^{®} K54 might trigger an epoxy homopolymerization reaction. If so, it was considered that for formulations calculated with a one-to-one stoichiometry between the epoxy content in component (A) and the amine content in component (B), unreacted amine groups would remain in the bulk leading to a weaker network. With this idea in mind, it was postulated that an excess of the epoxy content could yield better properties when using higher amounts of Ancamine^{®} K54, because enough epoxy would be available for the epoxy amine polyaddition reaction and for the epoxy homopolymerization reaction. Consequently, experiments with a non-stoichiometric ratio of components (A) and (B) were conducted (Examples 9 to 11). The results of these experiments are shown with respect to the R1 and B3 (80°C) values in Table 3, and with respect to the creep data in Fig. 2.

**Table 3. Compositions of Examples 9 to 11 and results for R1 and B3 at 80°C.**

| **Composition** | **Example 9** | **Example 10** | **Example 11** |
|---|---|---|---|
| **Example 7 A side** | 100 | 100 | 100 |
| **Example 7 B side** | 100 | 100 | 100 |
| **Stoichiometry (A):(B)** | 0.91:1 | 1.1:1 | 1.3:1 |
| **R1 / Mpa** | 30 | 30 | 34 |
| **SD / Mpa** | 1 | 1 | 1 |
| **B3 (80°C) / Mpa** | 18 | 25 | 26 |
| **SD / Mpa** | 1 | 2 | 2 |

Surprisingly, it was found that non-stoichiometric mixtures of (A):(B) containing high amounts of Ancamine^{®} K54, specifically those containing an excess of the epoxy part (i.e. A:B>1), lead to good R1 and B3 (80°C) values and creep data.

In order to confirm that other tertiary amine-containing catalysts also give a similar effect and support the idea that the homopolymerization is leading to this better creep and lower 80°C loads in formulations containing a high content (i.e. ≥5 wt.% in (B)) of these catalysts, commercially available catalyst 1,3,5-Tris[3-(dimethylamino)propyl]hexahydro-1,3,5-triazine (Lupragen^{®} N600; BASF) was tested.

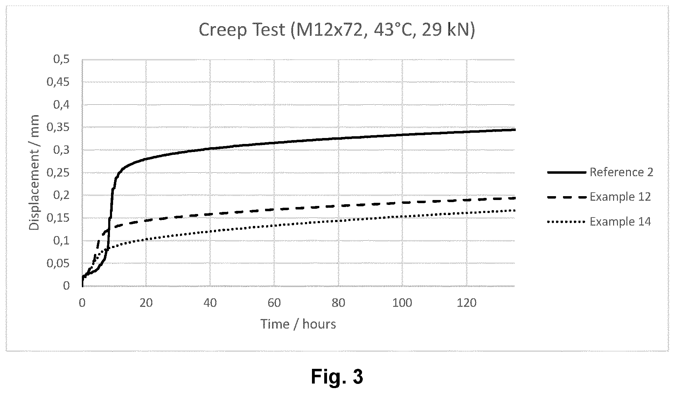

With this additional catalyst, the effect on R1 and 80°C pull out values for formulations containing 0, 5 and 10 wt% of the catalyst in a 1:1 stoichiometry and using an excess of the epoxy part (A:B stoichiometry = 1,3:1) was compared; see Table 4 for the results. From the obtained data, the 80°C drop was confirmed even for low contents of Lupragen^{®} N600 (Table 4, References 2 and 3, Examples 12 and 14) and the recuperation of the 80°C pull out values (B3) observed again for the systems in which an excess of the epoxy part and Lupragen^{®} N600 were used (Table 4, References 2 and 3 vs. Examples 13 and 15). Moreover, the creep data showed that Lupragen^{®} N600 was also able to improve the creep, see Fig. 3.

**Table 4. Composition of Examples 12 to 15 vs. References 2 and 3 and results for R1 and B3 at 80°C.**

| **Stoichiometry (A):(B)** | 1:1 | 1.3:1 | 1:1 | 1.3:1 | 1:1 | 1.3:1 |
|---|---|---|---|---|---|---|
| **(A) component / Resin** | **Reference 2** | **Reference 3** | **Example 12** | **Example 13** | **Example 14** | **Example 15** |
| BisA - Araldite^{®} GY 240 | 35 | 35 | 35.4 | 35.4 | 25.3 | 25.3 |
| BisF - Araldite^{®} GY 282 | 18.8 | 18.8 | 19 | 19 | 13.6 | 13.6 |
| BDDGE - Araldite^{®} DY-026 | 6.7 | 6.7 | 6.8 | 6.8 | 4.9 | 4.9 |
| TMPTGE - Araldite^{®} DY-T-CH | 6.7 | 6.7 | 6.8 | 6.8 | 4.9 | 4.9 |
| Millisil^{®} W12 | 30 | 30 | 29.3 | 29.3 | 48.7 | 48.7 |
| Cab-o-Sil^{®} 720 | 2.7 | 2.7 | 2.7 | 2.7 | 2.7 | 2.7 |
| E**EQ / g/eq** | **235** | **235** | **235** | **235** | **235** | **235** |

| **(B) component / Hardener** | | | | | | |
|---|---|---|---|---|---|---|
| Millisil^{®} W12 | 57.3 | 57.3 | 52.3 | 52.3 | 47.3 | 47.3 |
| Cab-o-Sil^{®} 720 | 4 | 4 | 4 | 4 | 4 | 4 |
| Lupragen^{®} N600 | 0 | 0 | 5 | 5 | 10 | 10 |
| mXDA | 36.8 | 36.8 | 36.8 | 36.8 | 36.8 | 36.8 |
| Ca(NO₃)₂ (80% in Glycerin) | 1.9 | 1.9 | 1.9 | 1.9 | 1.9 | 1.9 |
| **AHEQ / g/eq** | **92** | **92** | **92** | **92** | **92** | **92** |
| **R1 / Mpa** | 35 | 36 | 32 | 36 | 29 | 38 |
| **SD / Mpa** | 1 | 1 | 1 | 2 | 2 | 1 |
| **B3 (80°C) / Mpa** | 26 | 17 | 14 | 24 | 7 | 23 |
| **SD / Mpa** | 1 | 1 | 1 | 1 | 1 | 1 |

## Claims

1. A chemical anchor system, comprising:
a component (A) comprising an epoxide bearing two or more epoxy groups and having an epoxy equivalent, and
a component (B) comprising ≥ 5 wt.% of a tertiary amine, based on the total weight of component (B), and having an amino hydrogen equivalent,
wherein a ratio of components (A) and (B), based on the epoxy equivalent and the amino hydrogen equivalent, is non-stoichiometric.

2. The chemical anchor system according to claim 1, wherein the ratio of components (A) and (B) is >1:1, preferably ≥1.1:1 to 2:1.

3. The chemical anchor system according to claim 1 or 2, wherein the epoxy equivalent is ≥ 200 g/eq, and/or wherein the amino hydrogen equivalent is ≥ 50 g/eq.

4. The chemical anchor system according at least one of the preceding claims, wherein the tertiary amine bears at least three tertiary amine groups, and/or wherein the tertiary amine comprises a 6-membered ring.

5. The chemical anchor system according at least one of the preceding claims, wherein the tertiary amine is selected from 2,4,6-tris-(dimethylaminomethyl)phenol and 1,3,5-tris[3-(dimethylamino)propyl]hexahydro-1,3,5-triazine.

6. The chemical anchor system according at least one of the preceding claims, wherein component (B) further comprises at least one hardening agent for the epoxide.

7. The chemical anchor system according at least one of the preceding claims, wherein component (B) additionally comprises an accelerator selected among inorganic salts (S) or phenol derivatives or a combination thereof.

8. The chemical anchor system according at least one of the preceding claims, wherein the system has, according to EAD 330499-00-0601 of December 2018, an R1 value of ≥ 20 MPa, and/or a B3 (80°C) value of ≥ 5 MPa.

9. The chemical anchor system according at least one of the preceding claims, wherein the system shows in a creep test, according to EAD 330499-00-0601 of December 2018, conditions M12x72, 27.1 kN and 43°C, a displacement at 200 hours of ≤ 0.5 mm.

10. The chemical anchor system according at least one of the preceding claims, wherein component (A) comprises at least one of a 4,4'-(propane-2,2-diyl)diphenol-based epoxy resin and a 4,4'-methylenediphenol-based epoxy resin.

11. The chemical anchor system according at least one of the preceding claims,
wherein the ratio of components (A) and (B) is ≥1.1:1 to 2:1,
wherein the epoxy equivalent is ≥ 200 eq/g, and wherein the amino hydrogen equivalent is ≥ 50 eq/g,
wherein the tertiary amine is present in component (B) in an amount of ≥ 10 wt.% and is selected from 2,4,6-tris-(dimethylaminomethyl)phenol and 1,3,5-tris[3-(dimethylamino)propyl]hexahydro-1,3,5-triazine,
wherein component (B) further comprises m-xylylenediamine, and
wherein component (A) comprises at least one of 4,4'-(propane-2,2-diyl)diphenol-based epoxy resin and a 4,4'-methylenediphenol-based epoxy resin.

12. A chemical anchor comprising a physical mixture of component (A) and component (B) of a chemical anchor system according to at least one of the preceding claims.

13. A cured system comprising a chemical anchor according to claim 12.

14. A process for preparing a chemical anchor from a chemical anchor system according to at least one of claims 1 to 11, comprising the steps:
- separately providing component (A) and component (B), and
- thereafter mixing component (A) and component (B).

15. Use of a chemical anchor system according to at least one of claims 1 to 11 for chemically anchoring an element in concrete.
